# EUROPÄISCHE PATENTSCHRIFT

(11) **EP 2 322 332 B1**
(45) Veröffentlichungstag und Bekanntmachung des Hinweises auf die Patenterteilung: **26.08.2015**
(21) Anmeldenummer: 10013893.2
(22) Anmeldetag: 22.10.2010
(51) Int. Cl.: B28C 5/42, B60P 3/16, B62D 27/04, B62D 27/06

(54) **Fahrmischer mit einem Fahrgestell**
Truck mixer with a support frame
Bétonnière avec un châssis

(30) Priorität: 12.11.2009 DE 202009015406 U
(43) Veröffentlichungstag der Anmeldung: 18.05.2011
(73) Patentinhaber: Liebherr-Mischtechnik GmbH, 88427 Bad Schussenried (DE)
(72) Erfinder: Ruf, Berthold, 88477 Schönebürg (DE)
(74) Vertreter: Laufhütte, Dieter

(56) Entgegenhaltungen:
- CN-Y- 201 124 538
- DE-A1- 2 930 695
- GB-A- 677 938
- US-A- 4 575 254

## Beschreibung

Die vorliegende Erfindung betrifft einen Fahrmischer mit einem Fahrgestell, einem auf dem Fahrgestell angeordneten Mischerhilfsrahmen und einer Mischertrommel, welche über einen vorderen und einen hinteren Trommellagerbock auf dem Mischerhilfsrahmen angeordnet ist. Dabei ist zumindest der hintere Trommellagerbock über elastische, formschlüssige Verbindungen auf Längsträgern des Mischerhilfsrahmens befestigt.

Zunächst wurden Fahrmischer eingesetzt, bei welchen die Trommellagerböcke fest mit dem Mischerhilfsrahmen verschweißt sind. Damit wurde eine in alle Richtungen feste Krafteinleitung realisiert. Allerdings kam es durch Verformungen im Fahrgestell des Trägerfahrzeugs zu Spannungen und Rissen in den Verbindungsschweißungen.

Daher ist es üblich geworden, die Trommellagerböcke über elastische Verbindungen auf dem Mischerhilfsrahmen zu befestigen. Dabei ist üblicherweise ein Formstück vorgesehen, welches am Trommellagerbock festgeschweißt ist und mit welchem dieser in einem Gegenstück aufliegt, welches außen am Mischerhilfsrahmen angeschweißt ist. Mit diesem Formstück wird der Trommellagerbock in seiner Position zum Mischerhilfsrahmen formschlüssig fixiert. Weiterhin ist eine Bügelschraube vorgesehen, welche den Trommellagerbock und das Gegenstück am Mischerhilfsrahmen umgreift und so den Trommellagerbock und den Hilfsrahmen zueinander verspannt.

Eine solche elastische, formschlüssige Verbindung ist für geringere Relativbewegungen, die zwischen Trommellagerbock und Rahmen entstehen können, unempfindlich. Die bekannte Konstruktion mit einem an der Außenseite der Längsträger des Mischerhilfsrahmens angeschweißten Gegenstück weist jedoch sowohl hinsichtlich des Bauraums, als auch hinsichtlich der Kraftleinleitung Nachteile auf.

Aus der CN 201 124 538 Y und der US 4 575 254 A ist bereits ein gattungsgemäßer Fahrmischer mit einem Fahrgestell, einem auf dem Fahrgestell angeordneten Mischerhilfsrahmen und einer Mischertrommel bekannt.

Aufgabe der vorliegenden Erfindung ist es, einen Fahrmischer mit einer verbesserten elastischen formschlüssigen Verbindung des hinteren Trommellagerbocks zur Verfügung zu stellen.

Diese Aufgabe wird erfindungsgemäß durch einen Fahrmischer gemäß Anspruch 1 gelöst. Der erfindungsgemäße Fahrmischer umfasst dabei ein Fahrgestell, einen auf dem Fahrgestell angeordneten Mischerhilfsrahmen und eine Mischertrommel, welche über einen vorderen und einen hinteren Trommellagerbock auf dem Mischerhilfsrahmen angeordnet ist. Dabei ist zumindest der hintere Trommellagerbock über eine elastische, formschlüssige Verbindungen auf Längsträgern des Mischerhilfsrahmens befestigt. Erfindungsgemäß ist dabei vorgesehen, dass zumindest eine der Verbindungen zur Befestigung des hinteren Trommellagerbocks auf einem Längsträger des Mischerhilfsrahmens eine Verbindungsanordnung zur formschlüssigen elastischen Verbindung aufweist, welche innerhalb der Profilbreite des Längsträgers angeordnet ist.

Dies hat zum einen den Vorteil einer verbesserten Krafteinleitung in den Mischerhilfsrahmen, da die Verbindungsanordnung innerhalb der Profilbreite des Längsträgers angeordnet ist, so dass die Verbindungs-Kräfte direkt in den Längsträger eingeleitet werden. Hierdurch wird das Torsionsmoment, welches in die Längsträger eingeleitet wird, verringert.

Zudem wird der Bauraumbedarf erheblich verringert. Insbesondere muss bei der erfindungsgemäßen Verbindungsanordnung der Trommellagerbock in seinen äußeren Abmessungen nur noch wenig oder gar nicht mehr über den Hilfsrahmen des Fahrmischers nach außen hinausreichen. So gerät die Verbindungsanordnung bzw. der Trommellagerbock nicht mehr in Konflikt mit Teilen der Achseinheit. Zudem können im Bereich neben den Längsträgern Kotflügel oder Befestigungsbleche angeordnet werden.

Vorteilhafterweise weist der Längsträger des Hilfsrahmens eine in Längsrichtung gleichbleibende Profilbreite auf. Insbesondere umfasst der Längsträger des Hilfsrahmens dabei ein sich in Längsrichtung erstreckendes Profilelement auf. Erfindungsgemäß ist dabei vorgesehen, dass die Verbindungsanordnung innerhalb der Profilbreite dieses Profilelements angeordnet ist. Der Längsträger kann dabei z. B. ein U-Profil und/oder einem Kastenprofil aufweisen. Insbesondere kann der Längsträger dabei ein U-Profilelement umfassen, welches zumindest im Bereich des hinteren Trommellagerbockes mit Blechstreifen zu einem Kastenprofil geschlossen ist. Insbesondere handelt es sich dabei um ein kalt verformtes U-Profilelement.

Weiterhin vorteilhafterweise ist erfindungsgemäß vorgesehen, dass die Verbindungsanordnung innerhalb der Profilbreite des Längsträgers im wesentlichen mittig angeordnet ist. Hierdurch ergibt sich eine besonders gute Krafteinleitung, durch welche nur ein geringes oder überhaupt kein Torsionsmoment auf den Längsträger ausgeübt wird.

Es ist erfindungsgemäß vorgesehen, dass der hintere Trommellagerbock über eine innerhalb der Profilbreite des Längsträgers angeordnete Auflagefläche auf dem Längsträger aufliegt. Erfindungsgemäß ist die Auflagefläche dabei auf der Oberseite des Längsträgers angeordnet. Hierdurch ergibt sich wiederum eine direkte Krafteinleitung der Gewichtskraft vom Trommellagerbock in den Längsträger. Hierdurch wird die Biegebelastung der Befestigungsplatten, an welchen der Mischerhilfsrahmen an dem Fahrgestell verschweißt ist, verringert. Durch die Anordnung der Auflagefläche auf der Oberseite des Längsträgers kann dessen gesamtes Profil zur Aufnahme dieser Kräfte eingesetzt werden. Weiterhin vorteilhafterweise ist dabei vorgesehen, dass die Verbindungsanordnung im Bereich der Auflagefläche angeordnet ist. Insbesondere ist die Auflagefläche dabei in die Verbindungsanordnung integriert. Insbesondere kann dabei vorgesehen sein, dass die Auflagefläche ein Verbindungselement zum Herstellen einer formschlüssigen Verbindung zumindest auf zwei Seiten umgibt.

Die erfindungsgemäße Verbindungsanordnung legt den Trommellagerbock dabei zumindest in einer Richtung durch Formschluß am Längsträger des Mischerhilfsrahmens fest. Vorteilhafterweise legt die Verbindungsanordnung den Trommellagerbock jedoch sowohl in Querrichtung, als auch in Längsrichtung auf dem Längsträger durch Formschluß fest. Weiterhin vorteilhafterweise legt die Verbindungsanordnung den Trommellagerbock auch in Höhenrichtung auf dem Längsträger durch Formschluß fest.

Die Elastizität der Verbindung ergibt sich dabei vorteilhafterweise dadurch, dass ein Verbindungselement vorgesehen ist, welches die formschlüssige Verbindung herstellt und gegenüber dem Trommellagerbock und/oder dem Längsträger ein separates Element bildet. Insbesondere ist die Verbindungsanordnung dabei so ausgeführt, dass sie gegenüber Drehbewegungen um eine vertikale Drehachse keine formschlüssige Verbindung herstellt. Die Verbindungsanordnung ist hierdurch gegenüber Verwindungen des Mischerhilfsrahmens relativ unempfindlich. Weiterhin kann vorgesehen sein, dass die formschlüssige Verbindung ein gewisses Spiel aufweist, um die Elastizität der Verbindung zu verbessern.

Weiterhin vorteilhafterweise ist vorgesehen, dass zumindest eine Auflagefläche am Trommellagerbock und/oder an der Verbindungsanordnung ballig ausgeführt ist. Hierdurch entstehen auch durch Winkelbewegungen zwischen dem Hilfsrahmen und dem Trommellagerbock keine zusätzlichen Belastungskräfte. Insbesondere können Spannungsspitzen durch Kantendruck vermieden werden.

Weiterhin vorteilhafterweise ist vorgesehen, dass die Verbindungsanordnung eine Aussparung, insbesondere eine Bohrung im Trommellagerbock umfasst, durch welche ein am Längsträger in Längs- und/oder Breitenrichtung festgelegtes Verbindungselement hindurchgeht. Das Verbindungselement, welches in die Aussparung am Trommellagerbock eingreift, stellt so eine formschlüssige Verbindung zwischen Trommellagerbock und Längsträger in Längs- und/oder Breitenrichtung her. Insbesondere ist die Aussparung bzw. Bohrung dabei in einem Querträger des Trommellagerbocks angeordnet.

Weiterhin vorteilhafterweise ist dabei vorgesehen, dass der durch die Aussparung hindurchgehende Teil des Verbindungselements innerhalb der Profilbreite des Längsträgers angeordnet ist, insbesondere innerhalb der Profilbreite des Längsträgers im wesentlichen mittig. Hierdurch werden auch Quer- und Längskräfte mittig in den Längsträger eingeleitet.

Weiterhin vorteilhafterweise ist vorgesehen, dass die Verbindungsanordnung eine Verspannungsanordnung umfasst, über welche der hintere Trommellagerbock mit dem Längsträger verspannt ist. Die Verspannung sorgt so für eine sichere und dennoch elastische Festlegung des Trommellagerbocks am Längsträger. Die Verspannung erfolgt dabei vorteilhafterweise durch eine Verschraubung. Vorteilhafterweise sind dabei sowohl die Schraube, als auch die Mutter als zum Längsträger und/oder zum Trommellagerbock separate Elemente ausgeführt.

Weiterhin vorteilhafterweise ist vorgesehen, dass das Verbindungselement, welches durch eine Aussparung im Trommellagerbock hindurchgeht und so eine formschlüssige Verbindung in Längs- und/oder Querrichtung herstellt, zugleich Teil der Verspannungsanordnung ist. Hierfür ist das Verbindungselement vorteilhafterweise in Höhenrichtung am Längsträger festgelegt.

Weiterhin vorteilhafterweise ist vorgesehen, dass die Verspannungsanordnung eine Spannschraube umfasst, insbesondere eine Dehnschraube oder eine Schaftschraube. Insbesondere handelt es sich bei der Spannschraube dabei um eine Schraube, welche nur eine einzige Verschraubungsachse aufweist, und nicht um eine Bügelschraube. Vorteilhafterweise ist vorgesehen, dass die Spannschraube durch das Profil eines Querträgers des Trommellagerbocks hindurchgeht. Weiterhin vorteilhafterweise ist vorgesehen, dass die Verschraubungsachse der Spannschraube innerhalb der Profilbreite des Längsträgers angeordnet ist.

Es ist erfindungsgemäß vorgesehen, dass die Verbindungsanordnung auf der Oberseite des Profils des Längsträgers angeordnet ist. Hierdurch ist die Verbindungsanordnung besonders einfach auf dem Hilfsrahmen montierbar. Insbesondere ist dabei vorgesehen, dass Teile der Verbindungsanordnung mit der Oberseite des Profils des Längsträgers verschweißt sind. Insbesondere ist dabei vorgesehen, dass die mit der Oberseite des Profils des Längsträgers verschweißten Teile der Verbindungsanordnung über umlaufende Schweißnähte mit dem Profil verschweißt sind. Durch solche umlaufenden Schweißnähte wird die Rostgefahr verringert. Weiterhin ist vorgesehen, dass die Verbindungsanordnung mindestens eine Auflageanordnung aufweist, welche auf der Oberseite des Profils des Längsträgers angeordnet ist, wobei der Trommellagerbock auf einer Auflagefläche der Auflageanordnung aufliegt. Die Auflageanordnung sorgt so für eine gezielte Krafteinleitung in den Längsträger. Die Auflageanordnung kann dabei als separates Element zum Profil des Längsträgers ausgeführt sein. Vorteilhafterweise ist die Auflageanordnung jedoch auf der Oberseite des Profils mit dem Längsträger verschweißt.

Es ist vorgesehen, dass ein Verbindungselement zur Verbindung mit dem Trommelbock durch die Auflageanordnung in Höhenrichtung und/oder Längsrichtung und/oder Querrichtung und/oder gegenüber einer Drehbewegung um eine vertikale Drehachse formschlüssig am Längsträger festgelegt ist. Vorteilhafterweise ist dabei vorgesehen, dass die formschlüssige Festlegung zumindest ein gewisses Spiel zuläßt. Hierdurch wird die Flexibilität der Verbindungsanordnung erhöht.

Die Auflageanordnung umfasst hierzu eine entsprechende Aufnahme für das Verbindungselement, in welcher dieses entsprechend festlegbar ist. Insbesondere legt die Aufnahmeanordnung dabei das Verbindungselement zumindest in Höhenrichtung und/oder Längsrichtung fest.

Es ist dabei vorgesehen, dass die Auflageanordnung eine Aufnahme für das Verbindungselement aufweist, in welche dieses seitlich insbesondere in Querrichtung eingeschoben werden kann. Die Aufnahme legt das Verbindungselement damit in Längsrichtung fest und weist einen Hinterschnitt auf, hinter welchen ein Gegenelement am Verbindungselement geschoben werden kann, so dass dieses auch in Höhenrichtung am Längsträger festgelegt ist.

Weiterhin vorteilhafterweise umfasst die Verbindungsanordnung ein Rahmenelement, welches das Verbindungselement in Längsrichtung und/oder Querrichtung und/oder gegenüber einer Drehbewegung um eine vertikale Drehachse formschlüssig an der Auflageanordnung festlegt. Das Rahmenelement legt das Verbindungselement dabei vorteilhafterweise insbesondere in den Richtungen an der Auflageanordnung fest, in welchen das Verbindungselement nicht bereits durch die Form der Auflageanordnung an dieser festgelegt ist. Insbesondere legt das Rahmenelement dabei das Verbindungselement zumindest in Querrichtung und/oder gegenüber einer Drehbewegung um eine vertikale Drehachse formschlüssig fest. Vorteilhafterweise ist dabei vorgesehen, dass das Rahmenelement nach dem Einschieben des Verbindungselements in eine Aufnahme der Auflageanordnung auf einen Vorsprungsbereich der Auflageanordnung von oben aufgeschoben werden kann und so das Verbindungselement umgibt. Hierdurch wird eine ebenso einfache wie sichere Montage ermöglicht.

Weiterhin vorteilhafterweise ist vorgesehen, dass die Auflageanordnung zwei Auflageelemente aufweist, welche jeweils eine Auflagefläche aufweisen, wobei das Verbindungselement zwischen den Auflageelementen formschlüssig zumindest in Längsrichtung festgelegt ist. Die beiden Auflageelemente können so in Längsrichtung des Längsträgers nebeneinander an diesem angeschweißt werden und nehmen das Verbindungselement zwischen sich auf. Vorteilhafterweise weisen die Auflageelemente dabei jeweils Vorsprünge auf, unter welche Gegenelement und Verbindungselement eingeschoben werden können, um das Verbindungselement in Höhenrichtung an den Auflageelementen festzulegen.

Weiterhin vorteilhafterweise ist vorgesehen, dass das Verbindungselement eine Gewindebohrung zum Einschrauben einer Spannschraube umfasst. Das Verbindungselement dient damit nicht nur zur formschlüssigen Verbindung in Längs- und/oder Querrichtung, sondern erlaubt zusammen mit der Spannschraube auch eine formschlüssige Verbindung in Höhenrichtung sowie eine Verspannung des Trommellagerbocks mit dem Längsträger.

Vorteilhafterweise ist die Gewindebohrung dabei in einem Vorsprung angeordnet, welcher durch eine Aussparung im Trommellagerbock, insbesondere im Querträger des Trommellagerbocks, hindurchgeht.

Weiterhin vorteilhafterweise ist vorgesehen, dass die wirksamen Gewindegänge der Spannschraube im zugbelasteten Teil des Verbindungselementes angeordnet sind, insbesondere im Bereich des Vorsprungs. Durch diese Ausführung der Mutter als Zugmutter wird eine höhere Dauerfestigkeit erreicht.

Alternativ zu der auf der Oberseite des Profils des Längsträgers angeordneten Verbindungsanordnung kann auch ein Teil der Verbindungsanordnung in Höhenrichtung gesehen innerhalb und/oder unterhalb des Profils des Längsträgers angeordnet sein. Insbesondere kann dabei eine Schraubhülse und/oder Mutter innerhalb oder unterhalb des Profils des Längsträgers angeordnet sein.

Vorteilhafterweise ist dabei eine Aussparung in der Oberseite des Profils des Längsträgers vorgesehen, durch welche ein Verbindungselement der Verbindungsanordnung hindurchgeht, insbesondere eine Spannschraube. Bei der Aussparung handelt es sich dabei vorteilhafterweise um eine Bohrung.

Weiterhin vorteilhafterweise ist ein Zwischenelement vorgesehen, über welches der Trommellagerbock auf der Oberseite des Profils des Längsträgers aufliegt. Insbesondere kann das Zwischenelement dabei so ausgeführt sein, dass es einen Formschluß in Querrichtung und/oder Längsrichtung zwischen dem Trommellagerbock und dem Längsträger herstellt. Insbesondere weist das Zwischenelement hierfür vorteilhafterweise einen ersten Vorsprung auf, mit welchem es in einer Aussparung am Trommellagerbock eingreift. Weiterhin vorteilhafterweise weist es einen zweiten Vorsprung auf, mit welchem es in eine Aussparung am Längsträger eingreift.

Bei dem erfindungsgemäßen Fahrmischer ist vorteilhafterweise vorgesehen, dass zur Befestigung des hinteren Trommellagerbocks an den Längsträgern des Mischerhilfsrahmens vier erfindungsgemäße Verbindungsanordnungen vorgesehen sind. Insbesondere weist der hintere Trommellagerbock dabei zwei in Längsrichtung nebeneinander angeordnete Querstreben auf, welche jeweils über erfindungsgemäße Verbindungsanordnungen mit den Längsträgern des Mischerhilfsrahmens verbunden sind.

Vorteilhafterweise ist dabei vorgesehen, dass das Gesamtsystem aus den vier Verbindungsanordnungen eine formschlüssige Verbindung in Längs- und Querrichtung bereitstellt. Dabei ist nicht zwingend vorgesehen, dass alle vier Verbindungsanordnungen jeweils einen Formschluß in Fahrzeuglängs- und -querrichtung herstellen. Vielmehr muss der Formschluß lediglich innerhalb des Gesamtsystems gewährleistet sein. Vorteilhafterweise stellt jedoch jede der Verbindungsanordnungen einen Formschluß sowohl in Längs- als auch in Querrichtung zur Verfügung.

Der Mischerhilfsrahmen umfasst dabei vorteilhafterweise zwei Längsträger, welche durch Querträger miteinander verbunden sind. Der hintere Trommellagerbock weist weiterhin vorteilhafterweise zwei Querträger auf, auf welchen sich die Trommellagerung aufstützt.

Der vorderen Trommellagerbock ist vorteilhafterweise ebenfalls über elastische formschlüssige Verbindungen mit den Längsträgern des Hilfsrahmens verbunden. Diese elastischen Verbindungen müssen jedoch nicht erfindungsgemäß ausgeführt sein. Vielmehr können diese z. B. auch außerhalb der Profilbreite von außen an die Längsträger angeschweißt sein.

Die vorliegende Erfindung umfasst weiterhin einen Mischeraufbau für einen Fahrmischer, wie er oben dargestellt wurde, bei welchem der hintere Trommellagerbock durch eine erfindungsgemäße Verbindungsanordnung mit einem Hilfsrahmen eines LKW verbunden oder verbindbar ist.

Eine Verbindungsanordnung, wie er oben beschrieben wurde, kann eingesetzt werden, um den hinteren Trommellagerbock auf einem Hilfsrahmen eines LKWs sicher elastisch und formschlüssig zu befestigen. Die Verbindungsanordnung umfasst dabei insbesondere ein Verbindungselement, welches erfindungsgemäß innerhalb der Profilbreite des Längsträgers angeordnet ist. Vorteilhafterweise ist das Verbindungselement dabei als separates Bauteil sowohl zum Längsträger, als auch zum Trommellagerbock ausgeführt. Die Ausführung der Verbindungsanordnung ist dabei bereits oben näher beschrieben worden.

Die vorliegende Erfindung wird nun anhand von Ausführungsbeispielen sowie Zeichnungen näher beschrieben. Dabei zeigen:
- Figur 1:: ein Ausführungsbeispiel eines Mischerhilfsrahmens und eines hinteren Trommellagerbocks für einen Fahrmischer gemäß der vorliegenden Erfindung,
- Figur 2:: ein erstes Ausführungsbeispiel einer nicht erfindungsgemäßen Verbindungsanordnung,
- Figur 3:: ein zweites Ausführungsbeispiel einer erfindungsgemäßen Verbindungsanordnung in einer perspektivischen Ansicht,
- Figur 4a:: das zweite Ausführungsbeispiel einer erfindungsgemäßen Verbindungsanordnung in einer Schnittansicht entlang der Längsrichtung des Längsträgers,
- Figur 4b:: das zweite Ausführungsbeispiel einer erfindungsgemäßen Verbindungsanordnung in einer Schnittansicht in Querrichtung des Längsträgers und
- Figuren 5a - 5c:: die Herstellung einer Verbindung zwischen einem Längsträger und dem hinteren Trommellagerbock gemäß dem zweiten Ausführungsbeispiel in der vorliegenden Erfindung.

Ein Fahrmischer gemäß der vorliegenden Erfindung umfasst ein Grundgerät mit einem Fahrgestell, wobei das Grundgerät im wesentlichen wie ein normaler LKW aufgebaut ist. Insbesondere weist das Grundgerät dabei eine vorne angeordnete Fahrerkabine, einen Antriebsmotor und mindestens zwei bereifte Achsen auf, über welche das Grundgerät verfahrbar ist. Auf dem Fahrgestell des Grundgeräts ist ein Mischerhilfsrahmen angeordnet, auf welchem die Mischertrommel über vordere und hintere Trommellagerböcke befestigt ist. Der Mischerhilfsrahmen umfasst dabei linke und rechte Längsträger, welche durch Querträger miteinander verbunden sind. Auf den Längsträgern stützen sich Querträger der Trommellagerböcke auf. Die Mischertrommel ist dabei am vorderen und am hinteren Trommellagerbock jeweils drehbar gelagert. Am vorderen Trommellagerbock ist dabei üblicherweise der Antriebsmotor zum Drehen der Mischtrommel angeordnet. Am hinteren Trommellagerbock kann z. B. eine Laufrollenlagerung für die Mischertrommel angeordnet sein, sowie Anordnungen zum Befüllen und/oder Entleeren der Mischtrommel. Der Fahrmischer dient dabei dem Transport von Flüssigbeton in der Mischertrommel.

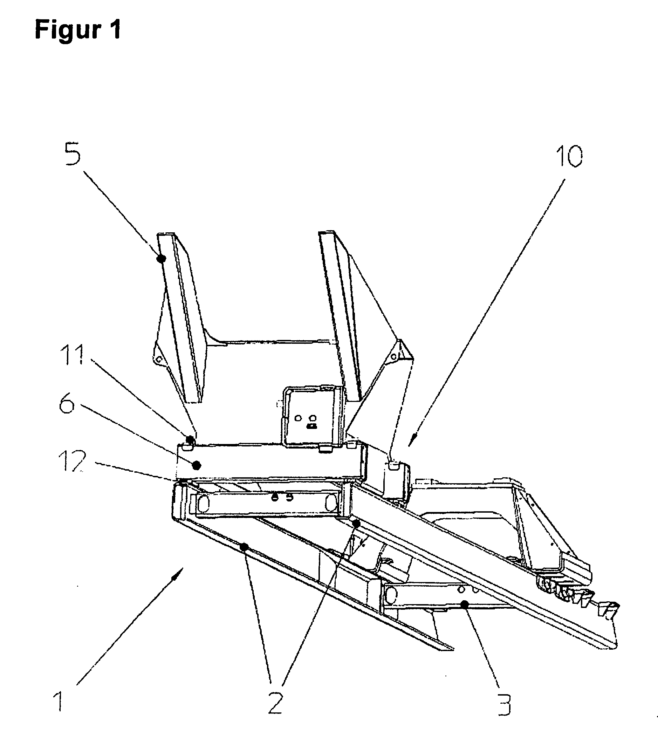

Figur 1 zeigt dabei einen Mischerhilfsrahmen 1, welcher zwei Längsträger 2 umfasst, die von Querträgern 3 miteinander verbunden werden. Die Längsträger sind dabei, wie auch aus den übrigen Zeichnungen hervorgeht, aus einem U-Profilelement hergestellt, welches im Bereich des hinteren Trommellagerbockes mit einem Blechstreifen 33 zu einem Kastenprofil geschlossen ist. Das U-Profilelement ist dabei kaltverformt. Die Grundfläche des U-Profils bildet dabei die äußere Seitenwand 34 des Längsträgers, während die Oberseite 30 und die Unterseite 31 des Längsträgers durch die Schenkel des U-Profils gebildet sind. Der Blechstreifen 33 bildet damit die Innenwand des Kastenprofils. Weiterhin können im Bereich der Verbindungsanordnungen zwischen dem hinteren Trommellagerbock und dem Längsträger Querwände in dem Kastenprofil eingeschweißt sein, um die Stabilität zu erhöhen.

Der hintere Trommellagerbock 5, wie er in Figur 1 gezeigt ist, weist zwei Querträger 6 auf, welche jeweils an ihren Enden mit den Längsträgern 2 des Mischerhilfsrahmens 1 verbunden sind. Am hinteren Trommellagerbock 5 sind dabei Auflageflächen zur Montage einer Rollenlagerung für die Mischertrommel, sowie rechte und linke Fortsätze zum Anbau von Aufbauten vorgesehen. Der hintere Trommellagerbock bildet dabei eine zusammenhängende Schweißkonstruktion.

Erfindungsgemäß ist nun vorgesehen, dass der hintere Trommellagerbock 5 über elastische, formschlüssige Verbindungen auf den Längsträgern 2 des Mischerhilfsrahmens befestigt ist. Die hierfür eingesetzten Verbindungsanordnungen 10 zur formschlüssigen elastischen Verbindung zwischen dem hinteren Trommellagerbock und den Längsträgern sind dabei jeweils innerhalb der Profilbreite des Längsträgers angeordnet. Dies hat zum einen den Vorteil, dass die Verbindungskräfte, welche durch die Verbindungsanordnung in den Längsträger eingeleitet werden, nur noch geringere Torsionsmomente erzeugen. Insbesondere ist dabei auch die Auflagefläche, über welche sich der hintere Trommellagerbock jeweils auf dem Längsträger aufstützt, innerhalb der Profilbreite des Längsträgers angeordnet. So erzeugt auch die hierdurch in den Längsträger eingeleitete Gewichtskraft kein oder doch zumindest nur ein geringeres Torsionsmoment.

Insbesondere ist die Verbindungsanordnung und insbesondere die Auflagefläche innerhalb der Profilbreite des Längsträgers im wesentlichen mittig angeordnet. Der Formschluß in Längs- und in Querrichtung wird dabei in den Ausführungsbeispielen jeweils durch ein Verbindungselement zur Verfügung gestellt, welches am Längsträger 2 in Längs- und Querrichtung festgelegt ist und mit einem entsprechenden Vorsprung in eine Aussparung an den Querträgern 6 des Trommellagerbocks 5 eingreift. Die Auflagefläche, mit welchen die Querträger 6 auf den Längsträgern 2 aufliegen, ist dabei auf mindestens zwei Seiten dieses Verbindungselements angeordnet. Weiterhin ist zur Verspannung der Verbindungsanordnung eine Spannschraube 11 vorgesehen, welche nur eine Verschraubachse aufweist. Der Formschluß ist dabei jeweils so ausgeführt, dass er einer Drehung des Querträgers gegenüber dem Längsträger um die Achse der Spannschraube nicht entgegensteht. Hierdurch wird die Flexibilität der Verbindungsanordnung erhöht.

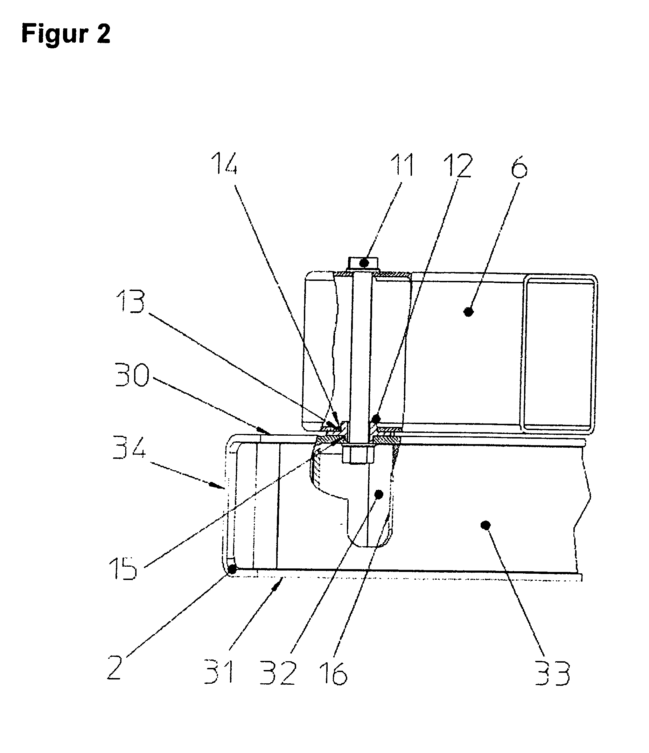

In Figur 1 wird dabei ein erstes Ausführungsbeispiel einer Verbindungsanordnung eingesetzt, wie es in Figur 2, die eine nicht erfindungsgemäße Ausführungsform zeigt, näher dargestellt ist. Der Querträger 6 des hinteren Trommellagerbocks liegt dabei über ein Zwischenstück 12 auf dem Längsträger 2 auf. Der Querträger 6 weist dabei im Bereich der Verbindung eine untere Aussparung 14 auf, in welche das Zwischenstück 12 mit einem ersten Vorsprung 13 eingreift. Das Zwischenstück 12 weist auf seiner Unterseite einen zweiten Vorsprung 15 auf, mit welchem es in eine Aussparung in der Oberseite 30 des Längsträgers 2 eingreift. Das Zwischenstück 12 ermöglicht so eine formschlüssige Festlegung des Querträgers 6 in Quer- und Längsrichtung am Längsträger 2. Die Aussparung zur Aufnahme des zweiten Vorsprungs 15 des Zwischenelements 12 ist dabei innerhalb der Profilbreite B des Längsträgers 2 im wesentlichen mittig angeordnet.

Die Vorsprünge 13 und 15 am Zwischenelement 12 sind dabei jeweils ringförmig ausgeführt und greifen in Bohrungen am Querträger 6 und am Längsträger 2 ein. Hierdurch erlaubt der Formschluß in Längs- und Querrichtung eine Drehbewegung um eine vertikale Drehachse. Das Zwischenelement 12 weist weiterhin eine Auflageplatte auf, welche die Vorsprünge 13 und 15 umgibt. Der Querträger 6 liegt dabei auf der Oberseite der Auflageplatte auf, während die Unterseite der Auflageplatte auf der Oberseite 30 des Längsträgers 2 aufliegt. Die Auflagefläche ist damit ebenfalls innerhalb der Profilbreite B des Längsträgers 2 angeordnet.

Zur Verspannung der Verbindungsanordnung ist weiterhin eine Schraube 11 vorgesehen, welche durch den Querträger 6 hindurchgeführt ist. Die Schraube 11 geht dabei durch eine Bohrung im Zwischenstück 12 hindurch in das Innere des Kastenprofils des Längsträgers 2. Dort ist eine Mutter bzw. Gewindehülse angeordnet, mit welcher die Schraube 11 verschraubt wird. Diese Mutter oder Hülse ist in Figur 2 nicht gezeigt.

Das Kastenprofil weist eine Aussparung 16 in dem Bleichstreifen 33 auf, so dass die Muter bzw. Hülse leichter zugänglich ist. Gegebenenfalls kann auch in der Unterseite 31 des Längsträgers eine Aussparung vorgesehen sein, durch welche die Mutter bzw. Gewindehülse eingeführt werden kann. Durch Anziehen der Schraube 11 wird der Querträger 6 mit dem Längsträger 2 im Bereich der Verbindungsanordnung verspannt.

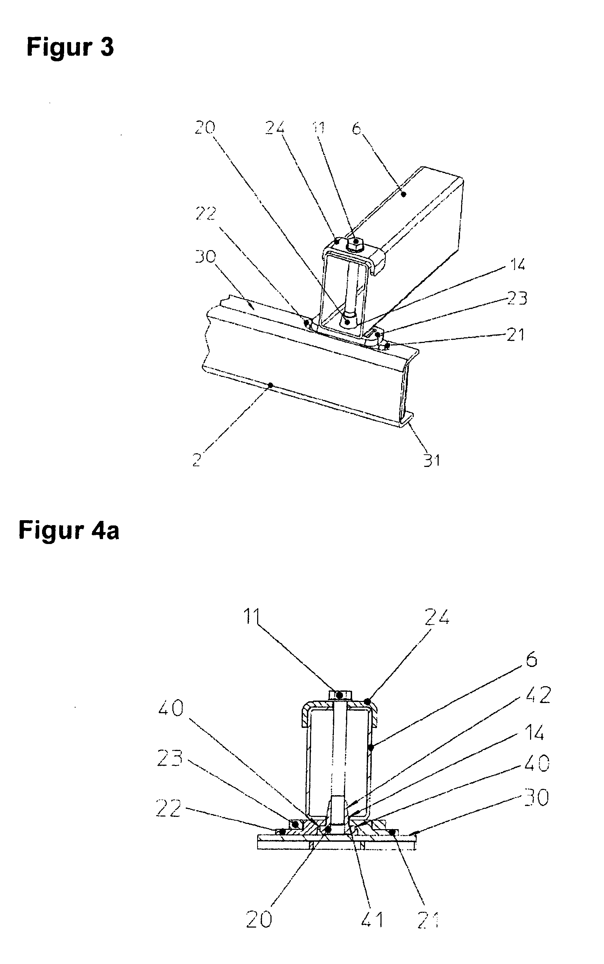

In Figur 3 ist nun ein zweites Ausführungsbeispiel einer erfindungsgemäßen Verbindungsanordnung gezeigt. Diese ist komplett auf der Oberseite des Längsträgers 2 angeordnet. Dabei sind Auflageteile 21 und 22 vorgesehen, welche jeweils auf der Oberseite 30 des Längsträgers 2 angeschweißt sind. Hierfür werden umlaufende Schweißnähte eingesetzt, um Rostprobleme zu vermeiden. Die Auflageteile weisen dabei auf ihrer Oberseite Auflageflächen auf, auf welchen sich der Querträger 6 mit seiner Unterseite abstützt.

An den Auflageteilen 21 und 22 ist weiterhin ein Verbindungselement 20 formschlüssig in Längsrichtung sowie in Höhenrichtung festgelegt. Das Verbindungselement 20 stellt dabei die formschlüssige Verbindung mit dem Querträger her.

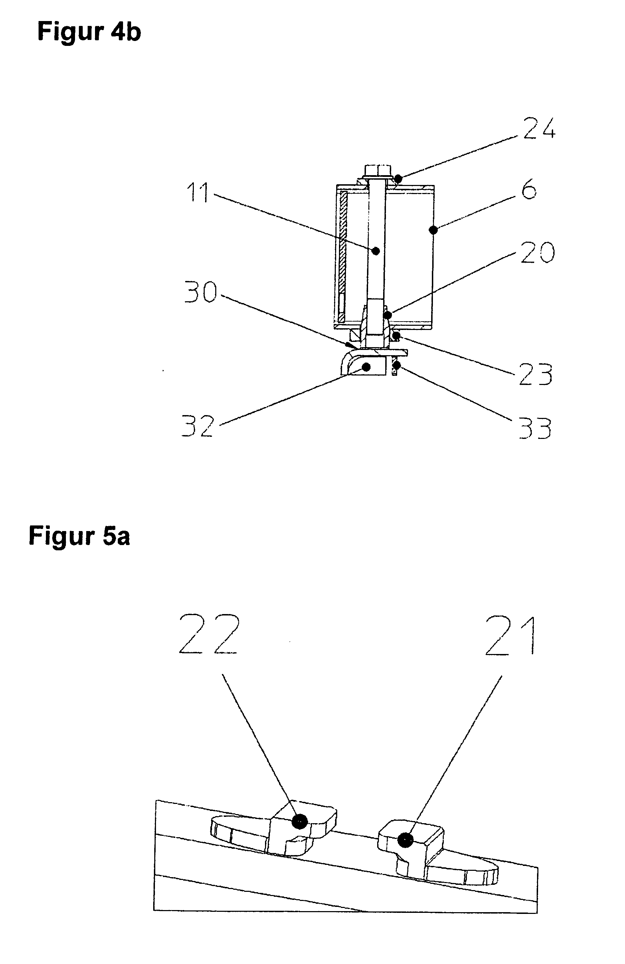

Die beiden Aufnahmeelemente 21 und 22 bilden dabei eine Aufnahme, in welche das Verbindungselement seitlich eingeschoben werden kann. Wie in Figur 4 gut zu erkennen, weisen die beiden Aufnahmeelemente 21 und 22 dabei Vorsprünge 40 auf, welche in Höhenrichtung einen Hinterschnitt bilden. Zwischen die beiden Auflageelemente 21 und 22 kann das Verbindungselement 20 daher seitlich eingeschoben werden, so dass sich ein Vorsprung 41 des Verbindungselements 20 in Höhenrichtung an den Vorsprüngen 40 der Auflageteile 21 und 22 abstützt. In Längsrichtung ist das Verbindungselement 20 ebenfalls zwischen den beiden Auflageteilen 21 und 22 formschlüssig gehalten.

Der Formschluß in Querrichtung wird dagegen durch ein Rahmenelement 23 hergestellt, welches nach dem Einschieben des Verbindungselements 20 auf die Auflageteile 21 und 22 von oben aufgeschoben wird. Das Rahmenelement umgibt dabei die Auflageflächen sowie das dazwischen liegende Verbindungselement 20. Hierdurch ist das Verbindungselement am Rahmenelement in Querrichtung festgelegt. Zudem ist das Verbindungselement 20 gegenüber Drehungen um eine vertikale Drehachse am Rahmenelement festgelegt.

Das Verbindungselement 20 weist einen Vorsprung 42 auf, mit welchem es durch eine Bohrung 14 an der Unterseite des Querträgers 6 hindurchgeht. Hierdurch wird der Querträger in Quer- und Längsrichtung am Längsträger 2 festgelegt. Der Vorsprung ist dabei rotationssymmetrisch, so dass er einer Drehbewegung um eine vertikale Drehachse nicht entgegensteht. Zum leichteren Aufsetzen des Querträgers 6 ist der Vorsprung 42 dabei konisch ausgeführt.

Zur Verspannung der Verbindungsanordnung ist wiederum eine Spannschraube 11 vorgesehen, welche durch den Querträger 6 hindurchgeht. Auf der Oberseite ist dabei eine Klammer 24 vorgesehen, welche für eine bessere Krafteinleitung in den Querträger 6 sorgt. Das Verbindungselement 20 weist eine Gewindebohrung auf, in welche die Spannschraube 11 eingeschraubt wird. Die Gewindebohrung ist dabei im Vorsprung 42 angeordnet. Im Ausführungsbeispiel geht die Gewindebohrung dabei komplett durch das Verbindungselement 20 hindurch. Das Verbindungselement ist dabei vorteilhafterweise als Zugmutter ausgeführt, das heißt die wirksamen Gewindegänge der Zugschraube 11 liegen im zugbelasteten Teil, das heißt im Vorsprung 42. Hierdurch wird eine höhere Dauerfestigkeit erreicht.

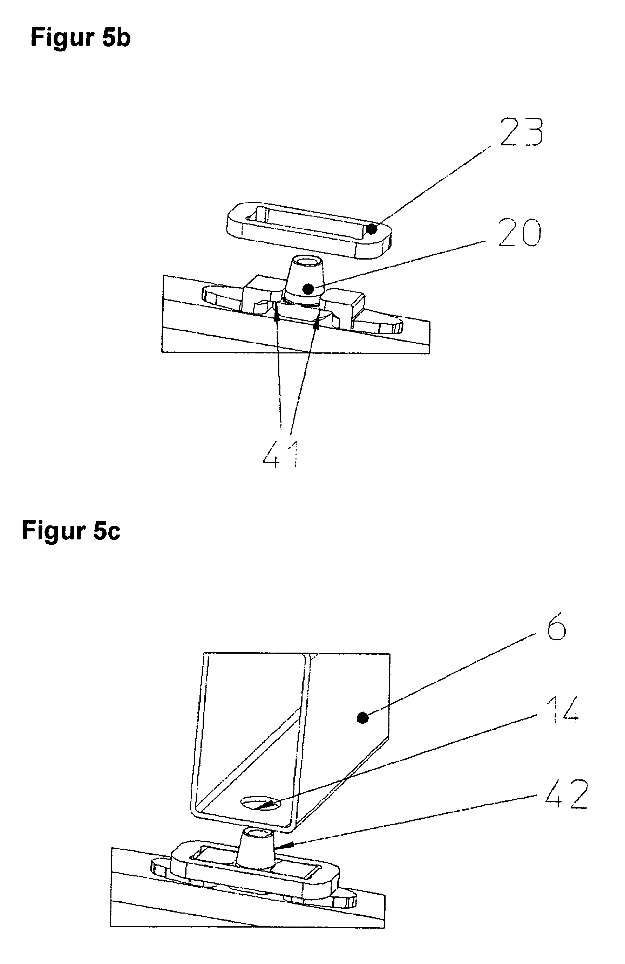

Die Montage des Querträgers am Längsträger ist nochmals in Figuren 5a bis 5c in drei Schritten gezeigt. Dabei werden zunächst die beiden Auflageteile 21 und 22 auf der Oberseite des Längsträgers verschweißt. Daraufhin wird das Verbindungselement 20 in die Aufnahme zwischen den beiden Auflageteilen 21 und 22 seitlich eingeschoben, so dass es an diesen in Längsrichtung und in Höhenrichtung formschlüssig festgelegt ist. Daraufhin wird das Rahmenelement 23 auf die Auflageteile 21 und 22 von oben aufgeschoben und umgibt die Auflageflächen der Auflageteile sowie das Verbindungselement 20. Hierdurch ist das Verbindungselement in Querrichtung sowie gegenüber Drehbewegungen festgelegt. Nun wird der Querträger mit einer Bohrung 14 an seiner Unterseite auf den Vorsprung 42 am Verbindungselement 20 aufgesetzt. Nun wird die Spannschraube 11 in das Verbindungselement 20 eingeschraubt werden, wie dies z. B. in Figuren 3 und 4 dargestellt ist.

Bei der vorliegenden Erfindung kommt vorteilhafterweise eine Dehn- und/oder Schaftschraube zum Einsatz. Diese ist kostengünstiger und leichter handhabbar als eine Bügelschraube, wie sie im Stand der Technik eingesetzt wurde. Vorteilhafterweise wird dabei eine Dehnschraube eingesetzt, da eine solche bessere Eigenschaften in der Dauerfestigkeit aufweist.

Weiterhin können die Kontaktflächen zwischen den Auflagen und dem Trommellagerbock bzw. den Auflagen und dem Längsträger ballig ausgeführt werden.

Dadurch entstehen auch durch Winkelbewegungen zwischen dem Hilfsrahmen und dem Trommellagerbock keine zusätzlichen Belastungskräfte. Spannungsspitzen durch Kantendruck werden so vermieden.

Da in der gezeigten Ausführungsform am hinteren Trommellagerbock vier Befestigungspunkte vorhanden sind, kann das System so ausgeführt werden, dass nicht an allen vier Punkten ein Formschluß in Fahrzeuglängs- und Querrichtung besteht, aber innerhalb des Gesamtsystems der Formschluß gewährleistet ist.

Neben der besseren Krafteinleitung ermöglicht die erfindungsgemäße Verbindungsanordnung zudem, den Trommellagerbock so kurz auszuführen, dass dieser in seinen äußeren Abmessungen wenig oder gar nicht über den seitlichen Rand des Hilfsrahmens des Fahrmischers und damit auch des LKW-Rahmens hinaus ragt.

Neben der verbesserten Krafteinleitung wird so auch die Einbausituation verbessert, insbesondere wenn Störkanten am Grundgerät zu beachten sind.

## Patentansprüche

1. Fahrmischer mit einem Fahrgestell, einem auf dem Fahrgestell angeordneten Mischerhilfsrahmen (1) und einer Mischertrommel, welche über einen vorderen und einen hinteren Trommellagerbock (5) auf dem Mischerhilfsrahmen (1) angeordnet ist, wobei zumindest der hintere Trommellagerbock (5) über elastische, formschlüssige Verbindungen auf Längsträgern (2) des Mischerhilfsrahmen (1) befestigt ist, wobei zumindest eine der Verbindungen zur Befestigung des hinteren Trommellagerbocks (5) auf einem Längsträger (2) des Mischerhilfsrahmens (1) eine Verbindungsanordnung (10) zur formschlüssigen elastischen Verbindung aufweist, wobei die Verbindungsanordnung (10) mindestens eine Auflageanordnung aufweist, welche auf der Oberseite des Profils des Längsträgers (2) angeordnet ist und insbesondere mit dieser verschweißt ist, wobei der Trommellagerbock (5) auf einer Auflagefläche der Auflageanordnung aufliegt, und wobei ein Verbindungselement (20) zur Verbindung mit dem Trommelbock durch die Auflageanordnung in Höhenrichtung und/oder Längsrichtung und/oder Querrichtung und/oder gegenüber einer Drehbewegung um eine vertikale Drehachse formschlüssig am Längsträger (2) festgelegt ist, insbesondere zumindest in Höhenrichtung und/oder Längsrichtung und wobei die Auflageanordnung eine Aufnahme für das Verbindungselement (20) aufweist, in welche dieses seitlich insbesondere in Querrichtung eingeschoben werden kann , **dadurch gekennzeichnet, dass** die Verbindungsanordnung ; (10) innerhalb der Profilbreite des Längsträgers (2) angeordnet ist.

2. Fahrmischer nach Anspruch1, wobei eine Auflagefläche am Trommellagerbock (5) und/oder an der Verbindungsanordnung (10) ballig ausgeführt ist.

3. Fahrmischer nach einem der vorangegangenen Ansprüche, wobei die Verbindungsanordnung (10) eine Aussparung, insbesondere eine Bohrung im Trommellagerbock (5) umfasst, durch welche ein am Längsträger (2) in Längs- und/oder Breitenrichtung festgelegtes Verbindungselement (20) hindurchgeht, wobei vorteilhafterweise der durch die Aussparung hindurchgehende Teil des Verbindungselements (20) innerhalb der Profilbreite des Längsträgers (2) im Wesentlichen mittig angeordnet ist.

4. Fahrmischer nach einem der vorangegangenen Ansprüche, wobei die Verbindungsanordnung (10) eine Verspannungsanordnung (10) umfasst, über welche der hintere Trommellagerbock (5) mit dem Längsträger (2) verspannt ist, wobei vorteilhaferweise das Verbindungselement (20) einen Teil der Verspannungsanordnung bildet und hierfür in Höhenrichtung am Längsträger (2) festgelegt ist.

5. Fahrmischer nach Anspruch 4
wobei die Verspannungsanordnung (10) eine Spannschraube (11) umfasst, insbesondere eine Dehnschraube oder eine Schaftschraube, wobei vorteilhafterweise die Spannschraube (11) durch das Profil eines Querträgers (3) des Trommellagerbocks (5) hindurchgeht.

6. Fahrmischer nach Anspruch 1, mit einem Rahmenelement, (23) welches das Verbindungselement (20) in Längsrichtung und/oder Querrichtung und/oder gegenüber einer Drehbewegung um eine vertikale Drehachse formschlüssig an der Auflageanordnung festlegt, insbesondere zumindest in Querrichtung und/oder gegenüber einer Drehbewegung um eine vertikale Drehachse, wobei das Rahmenelement (23) vorteilhafterweise nach dem Einschieben des Verbindungselements (20) auf einen Vorsprungsbereich der Auflageanordnung von oben aufgeschoben werden kann.

7. Fahrmischer nach Anspruch 6, wobei die Auflageanordnung zwei Auflageelemente (21,22) aufweist, welche jeweils eine Auflagefläche aufweisen, wobei das Verbindungselement (20) zwischen den Auflageelementen (21,22) formschlüssig in Längsrichtung festgelegt ist und weiterhin vorteilhafterweise durch Einschieben unter Vorsprünge der Auflageelemente (21,22) in Höhenrichtung festgelegt ist.

8. Fahrmischer nach einem der Ansprüche 6 oder 7, wobei das Verbindungselement (20) eine Gewindebohrung zum Einschrauben einer Spannschraube (11) umfasst, wobei die Gewindebohrung vorteilhafterweise in einem Vorsprung angeordnet ist, welcher durch eine Aussparung im Trommellagerbock (5), insbesondere in einem Querträger (6) des Trommellagerbocks (5), hindurchgeht, wobei weiterhin vorteilhafterweise die wirksamen Gewindegänge der Spannschraube (11) im zugbelasteten Teil des Verbindungselementes (20) angeordnet sind, insbesondere im Bereich des Vorsprungs.

9. Fahrmischer nach einem der vorangegangenen Ansprüche, wobei zur Befestigung des hinteren Trommellagerbocks (5) an den Längsträgern (2) des Mischerhilfsrahmens (1) vier erfindungsgemäße Verbindungsanordnungen (10) vorgesehen sind, wobei vorteilhafterweise das Gesamtsystem aus den vier Verbindungsanordnungen (10) eine formschlüssige Verbindung in Längs- und Querrichtung bereit stellt.

## Claims

1. A truck mixer having a chassis, a mixer subframe (1) arranged on the chassis and a mixer drum which is arranged over a front drum support and a rear drum support (5) on the mixer subframe (1), wherein at least the rear drum support (5) is fastened on side members (2) of the mixer subframe (1) via elastic, shape-matched connections, wherein at least one of the connections for the fastening of the rear drum support (5) to a side member (2) of the mixer subframe (1) has a connection arrangement (10) for the shape-matched elastic connection, wherein the connection arrangement (10) has at least one support arrangement which is arranged on the upper side of the section of the side member (2) and is in particular welded thereto, wherein the drum support (5) lies on a support surface of the support arrangement, and wherein a connection element (20) for connection to the drum support by the support arrangement is fixed to the side member (2) in a shape-matched manner in the vertical direction and/or in the lengthways direction and/or in the transverse direction and/or with respect to a rotational movement about a vertical axis of rotation, in particular at least in the vertical direction and/or in the lengthways direction, and wherein the support arrangement has a receiver for the connection element (20) into which the latter can be laterally pushed in, in particular in the transverse direction,
**characterized in that**
the connection arrangement (10) is arranged within the section width of the side member (2).

2. A truck mixer in accordance with claim 1, wherein a support surface at the drum support (5) and/or at the connection arrangement (10) is made spherical.

3. A truck mixer in accordance with one of the preceding claims, wherein the connection arrangement (10) includes a cut-out, in particular a bore, in the drum support (5) through which a connection element (20) fixed to the side member (2) in the lengthways direction and/or breadthways direction passes, wherein the part of the connection element (20) passing through the cut-out is advantageously arranged substantially centrally within the section width of the side member (2).

4. A truck mixer in accordance with one of the preceding claims, wherein the connection arrangement (10) includes a bracing arrangement (10) via which the rear drum support (5) is braced with the side member (2), wherein the connection element (20) advantageously forms a part of the bracing arrangement and is fixed to the side member (2) in the vertical direction for this purpose.

5. A truck mixer in accordance with claim 4, wherein the bracing arrangement (10) includes a clamping bolt (11), in particular a stress bolt or a headless bolt, wherein the clamping bolt (11) advantageously passes through the section of a cross member (3) of the drum support (5).

6. A truck mixer in accordance with claim 1, having a frame element (23) which fixes the connection element (20) to the support arrangement in a shape-matched manner in the lengthways direction and/or in the transverse direction and/or with respect to a rotational movement about a vertical axis of rotation, in particular at least in the transverse direction and/or with respect to a rotational movement about a vertical axis of rotation, wherein the frame element (23) can advantageously be pushed onto a projection region of the support arrangement from above after the pushing in of the connection element (20).

7. A truck mixer in accordance with claim 6, wherein the support arrangement has two support elements (21, 22) which each have a support surface, wherein the connection element (20) is fixed in a shape-matched manner in the lengthways direction between the support elements (21, 22) and is furthermore advantageously fixed in the vertical direction by pushing in under projections of the support elements (21, 22).

8. A truck mixer in accordance with one of the claims 6 or 7, wherein the connection element (20) includes a threaded bore for the screwing in of a clamping bolt (11), wherein the threaded bore is advantageously arranged in a projection which passes through a cut-out in the drum support (5), in particular in a cross member (6) of the drum support (5), wherein further advantageously the effective thread pitches of the clamping bolt (11) are arranged in the part of the connection element (20) loaded in tension, in particular in the region of the projection.

9. A truck mixer in accordance with one of the preceding claims, wherein four connection arrangements (10) in accordance with the invention are provided for the fastening of the rear drum support (5) to the side members (2) of the mixer subframe (1), wherein the total system of the four connection arrangements (10) advantageously provides a shape-matched connection in the lengthways and transverse directions.

## Revendications

1. Bétonnière comprenant un châssis, un cadre auxiliaire de bétonnière (1) disposé sur le châssis et un tambour malaxeur, qui est disposé sur le cadre auxiliaire de bétonnière (1) par le biais d'un support de palier de tambour avant et d'un support de palier de tambour arrière (5), au moins le support de palier de tambour arrière (5) étant fixé sur des longerons (2) du cadre auxiliaire de bétonnière (1) par le biais de liaisons élastiques par complémentarité de formes, au moins l'une des liaisons destinées à fixer le support de palier de tambour arrière (5) sur un longeron (2) du cadre auxiliaire de bétonnière (1) présentant un agencement de liaison (10) destiné à la liaison élastique par complémentarité de formes, l'agencement de liaison (10) comportant au moins un agencement d'appui qui est disposé sur le côté supérieur du profilé du longeron (2) et qui est en particulier soudé avec celui-ci, le support de palier de tambour (5) reposant sur une surface d'appui de l'agencement d'appui et un élément de liaison (20) destiné à la liaison avec le support de tambour étant bloqué par complémentarité de formes sur le longeron (2) par l'agencement d'appui dans le sens de la hauteur et/ou dans le sens de la longueur et/ou dans le sens transversal et/ou par rapport à un mouvement de rotation sur un axe de rotation vertical, en particulier au moins dans le sens de la hauteur et/ou dans le sens de la longueur et l'agencement d'appui comportant un logement pour l'élément de liaison (20) dans lequel celui-ci peut être inséré par le côté en particulier transversalement, **caractérisée en ce que** l'agencement de liaison (10) est disposé dans la largeur de profilé du longeron (2).

2. Bétonnière selon la revendication 1, dans laquelle une surface d'appui est réalisée bombée sur le support de palier de tambour (5) et/ou sur l'agencement de liaison (10).

3. Bétonnière selon l'une des revendications précédentes, dans laquelle l'agencement de liaison (10) comprend un évidement, en particulier un trou dans le support de palier de tambour (5), à travers lequel passe un élément de liaison (20) bloqué sur le longeron (2) dans le sens de la longueur et/ou de la largeur, la partie de l'élément de liaison (20) passant à travers l'évidement étant disposée de manière avantageuse dans la largeur du profilé du longeron (2) sensiblement au milieu.

4. Bétonnière selon l'une des revendications précédentes, dans laquelle l'agencement de liaison (10) comprend un agencement de serrage (10) par le biais duquel le support de palier de tambour arrière (5) est serré avec le longeron (2), l'élément de liaison (20) formant de manière avantageuse une partie de l'agencement de serrage et étant bloqué à cet effet dans le sens de la hauteur sur le longeron (2).

5. Bétonnière selon la revendication 4, dans laquelle l'agencement de serrage (10) comprend une vis de serrage (11), en particulier une vis d'expansion ou une vis sans tête, la vis de serrage (11) passant de manière avantageuse à travers le profilé d'une traverse (3) du support de palier de tambour (5).

6. Bétonnière selon la revendication 1, comprenant un élément de cadre (23), qui bloque l'élément de liaison (20) dans le sens de la longueur et/ou dans le sens transversal et/ou par rapport à un mouvement de rotation sur un axe de rotation vertical sur l'agencement d'appui par complémentarité de formes, en particulier au moins dans le sens transversal et/ou par rapport à un mouvement de rotation sur un axe de rotation vertical, l'élément de cadre (23) pouvant de manière avantageuse être glissé par le haut après l'insertion de l'élément de liaison (20) sur une zone de saillie de l'agencement d'appui.

7. Bétonnière selon la revendication 6, dans laquelle l'agencement d'appui comporte deux éléments d'appui (21, 22) qui présentent chacun une surface d'appui, l'élément de liaison (20) entre les éléments d'appui (21, 22) étant bloqué par complémentarité de formes dans le sens de la longueur et toujours bloqué de manière avantageuse par l'insertion sous des saillies des éléments d'appui (21, 22) dans le sens de la hauteur.

8. Bétonnière selon l'une des revendications 6 ou 7, dans laquelle l'élément de liaison (20) comprend un trou fileté destiné à visser une vis de serrage (11), le trou fileté étant agencé de manière avantageuse dans une saillie, qui passe à travers un évidement dans le support de palier de tambour (5), en particulier dans une traverse (6) du support de palier de tambour (5), dans laquelle les filets efficaces de la vis de serrage (11) sont toujours disposés de manière avantageuse dans la partie sous contrainte de traction de l'élément de liaison (20), en particulier dans la zone de la saillie.

9. Bétonnière selon l'une des revendications précédentes, dans laquelle quatre agencements de liaison (10) selon l'invention sont prévus pour la fixation du support de palier de tambour arrière (5) sur les longerons (2) du cadre auxiliaire de bétonnière (1), le système entier mettant à disposition de manière avantageuse une liaison par complémentarité de formes dans le sens de la longueur et le sens transversal à partir des quatre agencements de liaison (10).
